Europäisches Patentamt

European Patent Office

Office européen des brevets

(19)

(11) **EP 1 481 866 A1**

(12) # DEMANDE DE BREVET EUROPEEN

(43) Date de publication:
**01.12.2004 Bulletin 2004/49**

(51) Int Cl.7: **B60T 13/52**, B60T 17/02,
B60K 41/20

(21) Numéro de dépôt: **04300300.3**

(22) Date de dépôt: **25.05.2004**

| | |
|---|---|
| (84) Etats contractants désignés:<br>**AT BE BG CH CY CZ DE DK EE ES FI FR GB GR HU IE IT LI LU MC NL PL PT RO SE SI SK TR**<br>Etats d'extension désignés:<br>**AL HR LT LV MK**<br><br>(30) Priorité: **28.05.2003 FR 0350193** | (71) Demandeur: **Renault s.a.s.**<br>**92100 Boulogne Billancourt (FR)**<br><br>(72) Inventeurs:<br> • **Rey, Pascal**<br> **91540 Mennecy (FR)**<br> • **Olivier, Isabelle**<br> **91190 Gif sur Yvette (FR)** |

(54) **Procédé de contrôle d'un système de freinage pour véhicule automobile comprenant un amplificateur a dépression**

(57) Procédé de contrôle d'un système de freinage pour véhicule automobile comprenant un amplificateur à dépression.

Le procédé de contrôle s'applique au système de freinage d'un véhicule automobile à moteur thermique qui comprend un amplificateur à dépression (14) comportant une chambre en dépression (16) actionné par une pédale de frein (2) qui permet de générer une force de freinage. Le moteur (20) du véhicule fourni de la puissance à des consommateurs de puissance. Selon le procédé :

- on détermine la valeur de la dépression qui règne dans la chambre (16) en dépression ;
- on compare cette valeur à une valeur de seuil bas ;
- on commande la coupure de la fourniture de puissance au consommateur (36) lorsque la comparaison détermine que la dépression dans la chambre (16) est inférieure au seuil bas.

Avantageusement, on ne commande le rétablissement de la fourniture de puissance que lorsque la comparaison a déterminée que la dépression qui règne de la chambre (16) est supérieure à un seuil haut supérieur au seuil bas.

FIG. 3

EP 1 481 866 A1

# Description

L'invention concerne un procédé de contrôle d'un système de freinage pour véhicule automobile à moteur thermique qui comprend un amplificateur à dépression comportant une chambre en dépression actionnée par une pédale de frein qui permet de générer une force de freinage, le moteur du véhicule fournissant de la puissance à des consommateurs de puissance.

Les véhicules automobiles actuels sont généralement équipés de systèmes de freinage assistés par un amplificateur de freinage à dépression. Ces amplificateurs comprennent généralement une chambre en dépression reliée à une source de vide. Ils permettent de multiplier la force d'appui exercée par le conducteur sur la pédale de frein du véhicule. Lorsque le véhicule est équipé d'un moteur dont la puissance est réglée par un volet papillon, en particulier les moteurs à essence, la source de vide est constituée par le collecteur d'admission. La chambre en dépression de l'amplificateur de freinage est alors reliée au collecteur d'admission par une canalisation d'aspiration raccordée au collecteur après le volet papillon.

Pour que l'assistance au freinage soit efficace, il est nécessaire que la dépression qui règne dans la chambre en dépression soit suffisante, c'est-à-dire en pratique qu'elle reste toujours au moins égale à une valeur minimale de seuil. Dans les véhicules modernes, ils doivent en outre fournir la puissance nécessaire au fonctionnement d'équipements de plus en plus nombreux. Ces équipements sont par exemple une boite de vitesses automatique, le compresseur du circuit de climatisation de l'habitacle du véhicule automobile, des résistances électriques de chauffage d'appoint, etc. La nécessité de fournir cette puissance conduit à ouvrir davantage le volet papillon, ce qui conduit une diminution de la dépression qui règne en aval de ce volet. Par exemple, une boîte de vitesse automatique réduit la dépression de 150 millibars ; le compresseur du circuit de climatisation réduit la dépression de 200 millibars, etc. La situation est encore aggravée en altitude, parce que la pression atmosphérique diminue, par exemple de 200 millibars à 2000 mètres d'altitude. La différence entre la pression atmosphérique et la pression qui règne dans la chambre en dépression devient alors insuffisante pour assurer un fonctionnement efficace de l'assistance au freinage. C'est le cas en particulier lorsque le moteur tourne au ralenti. La pédale de frein devient dure et les performances de freinage se dégradent.

L'invention à précisément pour objet d'un procédé de contrôle de la dépression qui règne dans la chambre en dépression d'un système de freinage de véhicule automobile à moteur thermique qui élimine ces problèmes en permettant de conserver en toute circonstance des performances optimales de l'assistance au freinage.

Ces buts sont atteints, conformément au procédé de l'invention, par le fait :

- on détermine la valeur de la dépression qui règne dans la chambre en dépression ;
- on compare cette valeur à une valeur de seuil bas ;
- on commande la coupure de la fourniture de puissance aux consommateurs de puissance lorsque la comparaison détermine que la dépression qui règne dans la chambre est inférieure au seuil bas.

La coupure de la fourniture de puissance au consommateur de puissance permet de décharger le moteur et par conséquent de fermer davantage le volet papillon. La dépression en aval du volet augmente, ce qui permet de régénérer la dépression dans la chambre en dépression du système d'assistance au freinage. Le fait que l'on coupe l'alimentation en puissance des équipements du véhicule présente un inconvénient mineur étant donné que cette coupure ne dure que quelques secondes. La prestation de ces équipements n'est donc pas affectée de manière notable.

Il est possible, selon l'invention, de commander le rétablissement de la fourniture de puissance aux consommateur s de puissance dès que la comparaison a déterminée que la dépression qui règne dans la chambre en dépression est repassée au dessus du seuil bas. Toutefois, dans une variante de réalisation préférée, on compare la dépression qui règne dans la chambre en dépression à une valeur de seuil haut, supérieure à la valeur de seuil bas, et on commande le rétablissement de la fourniture de puissance aux consommateurs de puissance seulement lorsque la comparaison de la dépression dans la chambre en dépression avec le seuil haut détermine que la dépression qui règne dans la chambre est supérieure au seuil haut.

Grâce à cette caractéristique, l'alimentation en puissance des consommateurs n'est pas rétablie immédiatement, mais seulement lorsqu'une réserve de dépression a été reconstituée dans la chambre en dépression. Cette mesure permet d'améliorer la stabilité du système.

Afin d'améliorer encore davantage la stabilité du système, on commande le rétablissement de la fourniture de puissance aux consommateurs de puissance seulement lorsque la comparaison de la dépression dans la chambre en dépression avec le seuil haut a déterminé que la dépression qui règne dans la chambre est restée supérieure au seuil haut pendant une durée prédéterminée.

Grâce à cette caractéristique, on évite les oscillations du système autour du seuil haut.

Dans un mode de réalisation du procédé on détermine la valeur de la dépression de la chambre en dépression par une mesure directe, notamment au moyen d'un capteur de pression implanté dans cette chambre.

Toutefois cette solution présente l'inconvénient de nécessiter l'implantation d'un capteur ce qui conduit à une nécessité de modifier le système d'assistance au freinage. D'autre part, le coût de ce système est augmenté.

Selon un autre mode mise en oeuvre du procédé, on utilise un modèle mathématique de la valeur de la dépression dans la chambre en dépression pour calculer une valeur modélisée de la dépression dans cette chambre, et on assimile la valeur de la dépression modélisée à la valeur réelle de la dépression pour le contrôle de la coupure et du rétablissement de l'alimentation des consommateurs de puissances. Ce mode de mise en oeuvre est particulièrement avantageux parce qu'il ne nécessite aucune modification du système d'assistance au freinage. D'autre part, sa mise en oeuvre ne nécessite le recours à aucun équipement supplémentaire. En effet, le calcul de la valeur modélisée de la dépression peut être réalisée au moyen d'un calculateur qui équipe déjà le véhicule par une solution entièrement logicielle.

Dans un mode de réalisation particulier, la valeur modélisée de la dépression de la chambre en dépression est égale à la valeur de la dépression dans le collecteur d'admission du moteur filtrée, notamment au premier degré, et diminuée des pertes de charges dans la canalisation qui relie le collecteur d'admission à la chambre en dépression.

Afin de tenir compte de l'augmentation de pression qui résulte d'un appui par le conducteur sur la pédale de frein, on prévoit un contact de détection d'un appui par le conducteur du véhicule sur la pédale de frein et on incrémente la valeur de la dépression dans la chambre en dépression d'un incrément lorsque le contact d'appui sur la pédale de frein a détecté une action de freinage.

Cet incrément peut naturellement être paramétré.

Afin de privilégier la surestimation plutôt que la sous-estimation de la pression dans la chambre en dépression, la pression modélisée initiale peut être égalée à la valeur de la pression atmosphérique.

Enfin, la pression dans la chambre dépression est saturée à la valeur de la pression atmosphérique.

D'autres caractéristiques et avantages de l'invention ressortiront encore de la description qu'il suit l'exemple de réalisation donné à titre illustratif en référence aux figures annexées. Sur ces figures :

- la figure 1 est un schéma de principe d'un système de freinage assisté par un amplificateur de freinage à dépression ;
- la figure 2 illustre l'évolution de la pression modélisée en fonction de différents évènements ;
- la figure 3 est un organigramme qui illustre un exemple de calcul d'une valeur modélisée de la dépression dans la chambre en dépression.

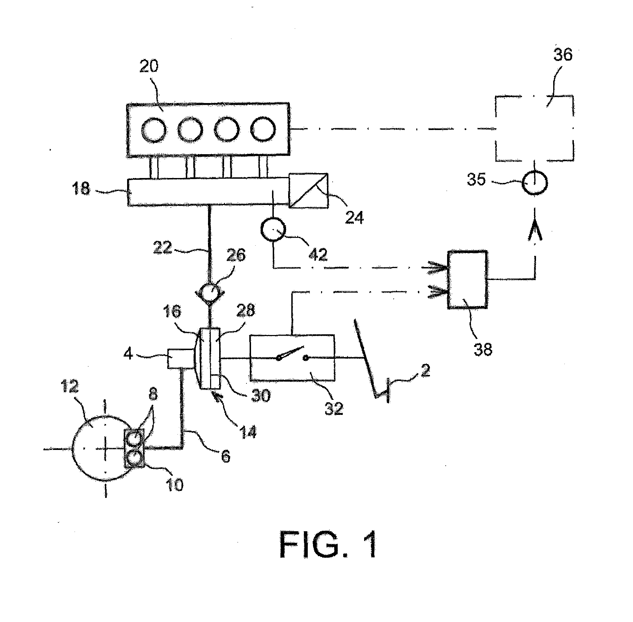

Le système de freinage représenté sur la figure 1 comprend une pédale de frein 2 permettant d'exercer une force de freinage sur la tige d'un maître cylindre 4 qui convertit la puissance mécanique transmise par la pédale 2 en une pression hydraulique. Cette pression, transmise par la canalisation 6, permet d'actionner les pistons 8 d'un étrier 10 de frein à disque 12. Afin de diminuer l'intensité de l'effort de freinage requis du conducteur sur la pédale 2, le système de freinage comprend un amplificateur de freinage à dépression 14. L'amplificateur 14, dont le fonctionnement est conventionnel, comprend une chambre en dépression 16 et une chambre à pression variable 28 séparée par un diaphragme 30. La chambre en dépression 16 est reliée à une source de vide constituée le plus souvent par le collecteur d'admission 18 du moteur 20 du véhicule. A cet effet une conduite d'aspiration 22 relie la chambre en dépression 16 au collecteur d'admission 18 en aval, par rapport au sens de l'admission de l'air moteur, d'un volet papillon 24. Un clapet anti-retour 26 monté sur la canalisation d'aspiration 22 empêche l'air de passer du collecteur d'admission 18 à la chambre en dépression 16 lorsque la pression dans le collecteur est supérieure à la pression dans la chambre en dépression. D'autre part l'amplificateur à dépression 14 comporte une chambre à pression variable 28. La pression dans cette chambre varie en fonction de l'effort de freinage exercé sur la pédale de frein 2. Lorsqu'aucun effort n'est exercé sur la pédale de frein, la pression dans les chambres 16 et 28 de part et d'autre du diaphragme 30 sont égales. Lorsque, au contraire, un effort est exercé sur la pédale de frein 2, la pression qui règne dans la chambre 28 augmente proportionnellement à l'effort exercé sur la pédale de frein jusqu'à une valeur maximale égale à la pression atmosphérique. La différence de pression entre les chambres 16 et 28 génère un effort qui amplifie l'effort de freinage exercé par le conducteur sur la pédale de frein.

Pour que l'amplificateur de freinage 14 puisse fonctionner convenablement, il est nécessaire que la dépression par rapport à la valeur de la pression atmosphérique qui règne dans la chambre en dépression 16 soit en permanence suffisante.

Un contact 32 permet de détecter un déplacement de la pédale de frein consécutif à une action de freinage du conducteur. Le contact de 32 peut être un contact à ouverture ou un contact à fermeture. Il est également possible de prévoir les deux types de contact simultanément.

Le moteur 20 est chargé par des consommateurs de puissance schématiquement désignés par le rectangle 36. Ces consommateurs de puissance peuvent être de type mécanique comme le compresseur du circuit de climatisation du véhicule automobile ou de type électrique. Ce sont, par exemple, des résistances électriques comme les thermoplongeurs dont la fonction est, dans les pays froids, de réchauffer le liquide de refroidissement du moteur, ou les CTP (résistances à coefficient de température positif) qui permettent de fournir un chauffage d'appoint en cas de grand froid. Les consommateurs électriques chargent indirectement le moteur par l'intermédiaire de l'alternateur qui doit les alimenter en courant électrique. L'ensemble des consommateurs de puissance, schématisé par le rectangle 36, contraint le moteur à délivrer la puissance nécessaire à leur alimentation et par suite, à ouvrir le papillon 24. Cela conduit à une chute de la dépression dans le collecteur d'admission 18 et par conséquent diminue la capacité de régénérer la réserve de dépression dans la chambre en dépression 16 reliée au collecteur 18 par la canalisation d'aspiration 22.

Conformément à l'invention le système de freinage représenté sur la figure 1, est équipé d'une unité de calcul 38. L'interrupteur 32 fourni un signal indiquant que le conducteur a exercé un appui sur la pédale de frein à l'unité de calcul 38. Par ailleurs, l'unité de calcul 38 reçoit un signal représentatif de la dépression qui règne dans le collecteur d'admission 18, signal qui lui ai transmis par le capteur de pression 42 implanté dans le collecteur 18. La fourniture de ces deux variables est suffisante pour que l'unité de calcul 38 calcule, selon un modèle mathématique prédéfini, une valeur modélisée de la pression dans la chambre en dépression 16. A titre d'exemple, la modélisation pourra consister à incrémenter d'une valeur prédéfinie une valeur estimée de la dépression calculée lors d'une itération précédente lorsqu'un appui sur la pédale de frein 2 est détecté par le contact 32. D'autre part, si la pression dans le collecteur d'admission 18 est supérieure à la pression de la chambre en dépression 16, l'unité de calcul 38 ne modifie pas la valeur de la dépression estimée puisqu'il y a un clapet anti-retour 26 pour empêcher que cette pression ne se communique à la chambre 16. Si, au contraire, la pression dans le collecteur 18 est plus basse que la pression dans chambre 16, l'unité de calcul 38 en tient compte en faisant diminuer, selon, une loi de variation déterminée, la valeur de la pression estimée dans la chambre 16. Par exemple, la pression dans la chambre en dépression 16 pourra égalée à la pression dans le collecteur 18 filtrée au premier degré pour tenir compte des pertes de charges provoquées par la présence du clapet 26 et de la canalisation d'aspiration 22.

L'unité de calcul 38 compare ensuite la valeur obtenue à une valeur de seuil bas. Si la pression modélisée descend en dessous de ce seuil, l'unité de calcul, qui comporte des pilotes de puissance, émet un signal de commande de coupure de l'alimentation des consommateurs de puissance 36. Le moteur 20 étant ainsi déchargé, il est possible de fermer davantage le volet papillon 24. La dépression dans le collecteur 18 augmente ce qui permet régénérer la dépression dans la chambre 16.

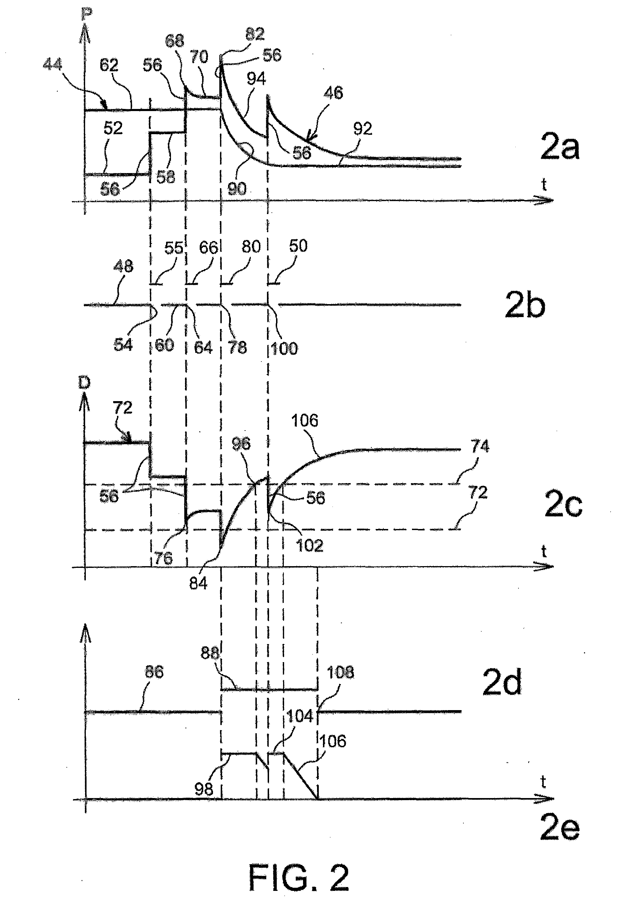

On a représenté sur le graphe 2a de la figure 2 la variation 44 de la pression dans le collecteur 18 et la variation 46 de la valeur modélisée de la pression dans la chambre en dépression 16 en fonction du temps "t" pour les états de la pédale de frein 2 donnés par la figure 2b. Cette dernière figure représente les états de la valeur de la variable booléenne entrée dans l'unité de calcul 38 (figure 1). Les segments 48, 60 de la figure 2b correspondent à un état relâché de la pédale de frein (booléen à 0) tandis que les segments 50, 55, 66, 80 correspondent à la détection d'un appui sur la pédale de frein (booléen à 1).

Pendant l'espace de temps correspondant au segment 52 (graphe 2a), aucune information d'appui sur la pédale de frein n'est transmise à l'unité de calcul 38. En conséquence cette dernière maintient stable la valeur modélisée de la pression dans la chambre 16. A l'instant 54 (graphe 2b), la valeur du booléen passe à 1 (segment 55). Par suite, l'unité de calcul 38 augmente la valeur de la pression modélisée d'un incrément 56 de telle sorte que cette valeur atteint le palier 58 (graphe 2a). La valeur de l'incrément 56 est un paramètre du modèle mathématique. Elle peut donc être modifiée de manière à obtenir une représentation aussi fidèle que possible de l'effet d'un appui sur la pédale de frein. Comme on le remarque, la valeur de la pression du palier 58 reste stable même après le relâchement de l'appui sur la pédale de frein (segment 60). Les valeurs de la pression modélisée correspondant aux palier s 52 et 58 sont inférieures à la pression dans le collecteur définie par le palier 62. En conséquence le clapet anti-retour 26 (figure 1) reste fermé ce qui interdit une communication entre le collecteur 18 et la chambre 16.

A l'instant 64, l'unité de calcul 38 reçoit à nouveau l'information que le contact 32 a détecté un appui sur la pédale de frein. En conséquence, elle ajoute une nouvelle fois la valeur de l'incrément 56 à la pression modélisée de telle sorte que cette dernière atteint la valeur définie par le point 68. Etant donné que cette valeur est maintenant supérieure au palier 62, le clapet anti-retour s'ouvre et une communication s'établit avec le collecteur 18, ce qui fait chuter la pression dans la chambre 16 comme représenté par la courbe 70.

Le graphe 2c de la figure 2 représente les variations 72 de la valeur modélisée de la dépression D dans la chambre en dépression 16. La courbe 72 du graphe 2c est symétrique de la courbe 44 du graphe 2a. En effet, quand la pression 44 augmente, par exemple de la valeur de l'incrément 56, la dépression 72 diminue de la même valeur.

On a porté sur le graphe 2c la valeur 72 de la dépression correspondant au seuil bas à partir duquel l'unité de calcul 38 commande la coupure des consommateurs 36 et la valeur 74 de la dépression correspondant au seuil haut à partir duquel l'unité de calcul commande le rétablissement des consommateurs de puissance.

Comme on peut le constater sur la figure 2c, la valeur de la dépression représentée par le point 76, symétrique du point 68 du graphe 2a, reste supérieure au seuil bas 72. En conséquence, conformément au modèle mathématique défini, l'unité de calcul 38 n'émet pas de commande de coupure des consommateurs de puissance.

A l'instant défini par le point 78 (graphe 2b), la valeur de la variable représentant l'appui sur la pédale de frein passe une troisième fois à 1 (segment 80) ce qui détermine une nouvelle augmentation de la pression modélisée d'un incrément 56. La pression dans la chambre 16 atteint alors la valeur 82 (graphe 2a) tandis que la valeur de la dépression atteint la valeur symétrique 84 (graphe 2c). Cette dernière augmentation de la pression (c'est-à-dire cette diminution de la dépression) détermine le franchissement du seuil bas 72, ce qui se traduit par l'émission d'un signal 88 de détection de pression insuffisante comme on peut le voir sur le graphe 2d . Antérieurement à l'instant 78, la valeur de la variable de détection de pression insuffisante est à 0 (palier 86). A partir de l'instant 78, cette variable passe à 1 (palier 88). En conséquence l'unité 38 émet un signal de commande qui actionne un relais 35 (figure 1) qui, à son tour coupe les consommateurs de puissance 36. Il en résulte une chute de la pression dans le collecteur comme l'illustre la courbe 90 du graphe 2a. La pression dans le collecteur atteint un nouveau palier 92 inférieur au palier 62. Etant donné que la pression dans le collecteur 18 est inférieure à la pression dans la chambre en dépression 16, le clapet anti-retour 26 est ouvert et la pression dans la chambre dépression suit, avec un certain retard, la chute de la pression dans le collecteur, comme illustré par le segment de courbe 94. Dans un exemple de réalisation, la variation de la valeur modélisée de la pression dans l'enceinte 16 est définie par l'équation suivante :

$$P_e^{\,i} = P_e^{\,i-1} + G\,(P_c^{\,i} - P_e^{\,i-1}).$$

Dans cette équation $P_e^{\,i}$ désigne la pression dans l'enceinte en dépression 16 à l'instant i ; $P_e^{\,i-1}$ désigne la pression dans l'enceinte 16 à l'instant i-1 ; $P_c^{\,i}$ désigne la pression dans le collecteur 18 à l'instant i. Les instants i sont définis par la fréquence d'échantillonnage, c'est-à-dire l'espace de temps qui sépare deux mesures de la pression dans le collecteur. Dans un exemple de réalisation une valeur de la dépression dans la chambre en dépression 16 est calculée toutes les 32 millisecondes.

L'augmentation de la dépression dans l'enceinte 16 se traduit par le franchissement du seuil haut 74 (figure 2c) au point 96. Toutefois l'unité de calcul 38 ne rétablit pas instantanément l'alimentation des consommateurs de puissance 36. En effet, dans l'exemple décrit, on a prévu une temporisation. La valeur modélisée de la dépression doit rester au dessus du seuil haut 74 pendant une durée prédéterminée sans repasser en dessous de ce seuil pour que l'alimentation de consommateur de puissance soit rétablie. A l'instant t correspondant au point 96, la temporisation se déclenche, comme représenté sur le graphe 2e. Toutefois, à l'instant 100 (graphe 2b) un quatrième appui sur la pédale de frein détermine une nouvelle chute de la dépression de telle sorte que le seuil haut 74 est franchi à la baisse (point 102). Ce franchissement du seuil détermine un arrêt de la temporisation qui est remise à zéro (palier 104, graphe 2e). La dépression dans l'enceinte augmente à nouveau, comme représenté par la courbe 106 de telle sorte que le seuil haut 74 est à nouveau franchi vers le haut, cette fois-ci de manière stable puisque aucun nouvel appui sur la pédale de frein n'est détecté. A l'expiration du délai de temporisation 106, l'indication de détection de dépression insuffisante prend fin (point 108) de telle sorte que l'unité 38 commande le rétablissement des consommateurs 36.

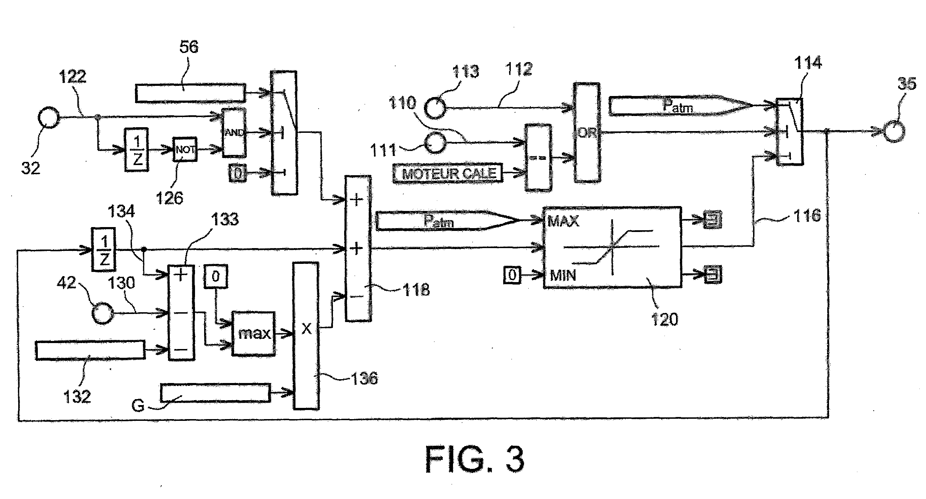

La figure 3 est un diagramme d'un exemple de modélisation de la valeur de la pression dans la chambre 16. Lorsque le moteur est à l'arrêt, la valeur de cette dépression est initialisée à la valeur de la pression atmosphérique (étape 114). Ainsi, par mesure de sécurité, on surestime la valeur de cette pression. En effet, si le véhicule n'est pas resté arrêté très longtemps, il est probable qu'une dépression subsiste dans le réservoir 16.

Si, au contraire, l'unité de calcul 38 reçoit une indication 110 du détecteur 111 que le moteur tourne et ne reçoit pas d'indication 112 d'imprécision de la pression dans la chambre en dépression du détecteur 113, la pression modélisée à l'instant i est égalée à la pression 116 modélisée à l'instant i-1 (l'étape 114). La pression modélisée à l'instant i est réinjectée dans l'additionneur 118. Ainsi, en régime stable, c'est-à-dire en l'absence d'événement extérieur, l'unité de calcul 38 reprend la même valeur de pression à chaque itération.

Si, au contraire, l'unité de calcul 38 reçoit du contact frein 32 l'indication d'un appui frein 122, la pression modélisée est augmentée dans l'additionneur 118 de la valeur de l'incrément 56. Toutefois, l'incrément ne doit être ajouté qu'une seule fois. En d'autres termes, si l'appui sur la pédale de frein se maintient, un seul incrément est ajouté à la pression modélisée. A cet effet, le modèle mathématique comprend une boucle 126 qui vérifie si à l'étape précédente l'indication d'un appui frein existait déjà. Si c'est le cas, la valeur 0 est introduite dans l'additionneur 118 au lieu de la valeur de l'incrément 56. De cette manière, l'incrément n'est ajouté qu'une seule fois pour un appui frein continu.

Comme on l'a décrit en référence à la figure 2, un ou plusieurs appuis successifs sur la pédale de frein peuvent conduire au franchissement du seuil bas 72. On effectue alors une comparaison entre la pression dans le collecteur 18 et la pression dans la chambre en dépression 16. Si la pression dans le collecteur est supérieure à la pression dans la chambre 16 le clapet anti-retour (figure 1) empêche une communication. La valeur 0 est alors introduite dans l'additionneur 118 de telle sorte que la pression ne diminue pas. Si au contraire la pression dans le collecteur est inférieure à la pression dans la chambre 16, la pression diminue selon une loi de variation prédéfinie. Par exemple, la pression de la chambre 16 suit la pression dans le collecteur avec un filtrage au premier degré. Pour cela on soustrait la pression 130 dans le collecteur et la perte de charge 132 entre le collecteur et l'enceinte 16 de la valeur modélisée de la pression dans l'enceinte (référence 134) obtenue à l'itération précédente dans l'additionneur 133. Cette différence est multipliée par la grandeur G, qui correspond au gain de l'équation définie précédemment, dans le multiplicateur 136. Le résultat de la multiplication est soustrait dans l'additionneur 118 de la valeur de la pression modélisée 134 de l'itération précédente. La valeur de sortie de l'additionneur 118 est saturée à l'étape 120 soit à zéro, soit à la valeur de la pression atmosphérique. En d'autres termes, si la valeur calculée dépasse la pression atmosphérique, par exemple par suite d'un grand nombre d'appuis successifs sur la pédale de frein qui se sont traduits par l'addition d'autant d'incréments à la valeur calculée de la dépression, le résultat calculé peut éventuellement dépasser la valeur de la pression atmosphérique, ce qui est une impossibilité physique. La valeur de la pression atmosphérique remplace alors la valeur calculée.

La valeur de pression modélisée obtenue actionne le relais 35 si elle dépasse la valeur de seuil bas prédéfini, comme on l'a expliqué précédemment.

## Revendications

1. Procédé de contrôle d'un système de freinage de véhicule automobile à moteur thermique qui comprend un amplificateur à dépression (14), comportant une chambre en dépression (16), actionné par une pédale de frein (2) qui permet de générer une force de freinage, le moteur (20) du véhicule fournissant de la puissance à des consommateurs de puissance (36), **caractérisé en ce que** :

   - on détermine la valeur de la dépression qui règne dans la chambre (16) en dépression ;
   - on compare cette valeur à une valeur de seuil bas (72) ;
   - on commande la coupure de la fourniture de puissance aux consommateurs de puissance (36) lorsque la comparaison détermine que la dépression qui règne dans la chambre (16) est inférieure au seuil bas (72).

2. Procédé selon la revendication 1 **caractérisé en ce que** l'on compare la dépression qui règne dans la chambre en dépression (16) à une valeur de seuil haut (74) supérieure à la valeur de seuil bas (72) et **en ce que** l'on commande le rétablissement de la fourniture de puissance au consommateur de puissance (36) seulement lorsque la comparaison de la dépression dans la chambre en dépression (16) avec le seuil haut (74) détermine que la dépression qui règne dans la chambre (16) est supérieure au seuil haut.

3. Procédé selon la revendication 1 ou 2 **caractérisé en ce que** l'on commande le rétablissement de la fourniture de puissance aux consommateurs de puissance (36) seulement lorsque la comparaison de la dépression de la chambre à dépression (16) avec le seuil haut à déterminé que la dépression qui règne dans la chambre (16) est resté supérieure au seuil haut (74) pendant une durée prédéterminée.

4. Procédé selon l'une des revendications 1 à 3 **caractérisé en ce que** l'on détermine la valeur de la dépression dans la chambre en dépression (16) par une mesure directe, notamment au moyen d'un capteur de pression implanté dans cette chambre.

5. Procédé selon l'une des revendications 1 à 3 **caractérisé en ce que** :

   - on utilise un modèle mathématique pour calculer une valeur modélisée de la dépression dans la chambre en dépression (16) ;
   - on assimile la valeur de la dépression modélisée à la valeur réelle de la dépression pour le contrôle de la coupure et du rétablissement de l'alimentation des consommateurs de puissance (36).

6. Procédé selon la revendication 5 **caractérisé en ce que** la valeur modélisée de la dépression de la chambre en dépression (16) est égale à la valeur de la dépression dans le collecteur d'admission (18) du moteur (20) filtrée, notamment au premier degré, et diminuée des pertes de charges dans une canalisation (22) qui relie le collecteur d'admission (18) à la chambre en dépression (16).

7. Procédé selon la revendication 5 ou 6, **caractérisé en ce que** l'on prévoit un contact (32) de détection d'un appui par le conducteur du véhicule sur la pédale de frein (2) et **en ce que** l'on incrémente la valeur de la dépression dans la chambre (16) d'un incrément (56) lorsque le contact d'appui (32) sur la pédale de frein (2) a détecté une action de freinage.

8. Procédé selon l'une des revendications 5 à 7 **caractérisé en ce que** la pression modélisée initiale dans la chambre en dépression (16) est égalée à la valeur de la pression atmosphérique.

9. Procédé selon l'une des revendications 5 à 8, **caractérisé en ce que** l'on sature la pression dans la chambre des pressions (16) à la valeur de la pression atmosphérique.

FIG. 1

FIG. 2

FIG. 3

EP 1 481 866 A1

EP 1 481 866 A1

| | Office européen des brevets | RAPPORT DE RECHERCHE EUROPEENNE | Numéro de la demande EP 04 30 0300 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 100 38 989 A (BOSCH GMBH ROBERT) 21 février 2002 (2002-02-21) * colonne 1, ligne 47 - colonne 2, ligne 21 * * colonne 3, ligne 32 - ligne 38 * * colonne 4, ligne 3 - ligne 20 * * colonne 5, ligne 24 - ligne 39 * * colonne 6, ligne 26 - ligne 45; figure 1 * | 1,4 | B60T13/52 B60T17/02 B60K41/20 |
| A | US 5 950 595 A (MASHIKI ZENICHIRO ET AL) 14 septembre 1999 (1999-09-14) * abrégé; figure 1 * | 1 | |
| A | DE 39 14 364 A (TEVES GMBH ALFRED) 31 octobre 1990 (1990-10-31) * colonne 1, ligne 63 - colonne 2, ligne 6 * * colonne 2, ligne 37 - ligne 44 * * colonne 4, ligne 15 - ligne 49; figure 1 * | 1 | |
| | | | DOMAINES TECHNIQUES RECHERCHES (Int.Cl.7) |
| A | FR 2 828 843 A (TOYOTA MOTOR CO LTD) 28 février 2003 (2003-02-28) * page 3, ligne 15 - page 4, ligne 2; figure 1 * | 1 | B60T B60K |
| A | US 4 328 669 A (MORT DEWEY F) 11 mai 1982 (1982-05-11) * colonne 1, ligne 67 - colonne 2, ligne 18 * * colonne 3, ligne 16 - ligne 45; figure 1 * | 1 | |

Le présent rapport a été établi pour toutes les revendications

| Lieu de la recherche | Date d'achèvement de la recherche | Examinateur |
|---|---|---|
| Munich | 6 septembre 2004 | HERNANDEZ, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

10

**ANNEXE AU RAPPORT DE RECHERCHE EUROPEENNE
RELATIF A LA DEMANDE DE BREVET EUROPEEN NO.**                    EP 04 30 0300

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-09-2004

| Document brevet cité au rapport de recherche | | Date de publication | Membre(s) de la famille de brevet(s) | | Date de publication |
|---|---|---|---|---|---|
| DE 10038989 | A | 21-02-2002 | DE | 10038989 A1 | 21-02-2002 |
| | | | WO | 0212041 A1 | 14-02-2002 |
| | | | EP | 1233897 A1 | 28-08-2002 |
| | | | JP | 2004505836 T | 26-02-2004 |
| | | | US | 2003019473 A1 | 30-01-2003 |
| US 5950595 | A | 14-09-1999 | JP | 3031270 B2 | 10-04-2000 |
| | | | JP | 10157606 A | 16-06-1998 |
| | | | DE | 19753450 A1 | 10-06-1998 |
| | | | DE | 19758626 C2 | 07-08-2003 |
| DE 3914364 | A | 31-10-1990 | DE | 3914364 A1 | 31-10-1990 |
| FR 2828843 | A | 28-02-2003 | JP | 2003065122 A | 05-03-2003 |
| | | | DE | 10239059 A1 | 30-04-2003 |
| | | | FR | 2828843 A1 | 28-02-2003 |
| US 4328669 | A | 11-05-1982 | AUCUN | | |

EPO FORM P0460